# EUROPEAN PATENT APPLICATION

(11) **EP 2 424 252 A2**
(43) Date of publication of application: **29.02.2012**
(21) Application number: 11162908.5
(22) Date of filing: 18.04.2011
(51) Int. Cl.: H04N 13/00, H04N 21/442, H04N 21/8355

(54) **Video display apparatus and video display method**

(30) Priority: 26.08.2010 JP 2010189977
(71) Applicant: Kabushiki Kaisha Toshiba, Tokyo 105-8001 (JP)
(72) Inventor: Yamaguchi, Takanori, Tokyo 105-8001 (JP)
(74) Representative: Henkel, Breuer & Partner

(57) **Abstract**

According to one embodiment, a video display apparatus includes a measuring module and a controller. The measuring module is configured to measure a viewing time of 3D video. The controller is configured to determine whether or not the viewing time has reached or will soon reach a viewing restriction time and, if determining that the viewing time has reached or will soon reach the viewing restriction time, to cause a display module to make a display indicating that the viewing time has reached or will soon reach the viewing restriction time.

## Description

### Field

Embodiments described herein relate generally to a video display apparatus and a video display method for displaying three-dimensional (3D) video.

### Background

Video display apparatus such as digital broadcast receivers which display 3D video are now on the market. In viewing 3D video using, for example, a digital broadcast receiver, it is possible to make a warning message to notify the user of expiry of a 3D viewing restriction time in consideration of influence of 3D viewing on the user's health. If the user follows the warning message, the 3D viewing time can be restricted and hence the user's eye fatigue etc. can be reduced.

As for user settings relating to a 3D viewing restriction time, it is now desired that the user be able to set a 3D viewing restriction time, warning timing, viewing continuation/non-continuation, etc. in a more flexible manner. However, no means for satisfying this desire is known.

### BRIEF DESCRIPTION OF THE SEVERAL VIEWS OF THE DRAWINGS

A general configuration that implements the various features of the invention will be described with reference to the drawings. The drawings and the associated descriptions are provided to illustrate embodiments of the invention and not to limit the scope of the invention.
Fig. 1 is an exemplary view showing a screen for setting a 3D viewing restriction time according to a first embodiment;
Fig. 2 is an exemplary view showing a screen for setting a manner of notification of a 3D viewing restriction time in a second embodiment;
Fig. 3 is an exemplary view showing a 3D viewing continuation confirmation screen according to the first embodiment;
Fig. 4 is an exemplary block diagram showing an essential configuration of a 3D video playback system according to the first embodiment;
Fig. 5 is an exemplary block diagram showing a signal processing system of a digital TV broadcast receiver as the 3D video playback system according to the first embodiment; and
Fig. 6 is an exemplary flowchart showing a process that is executed by a controller in the first embodiment.

### DETAILED DESCRIPTION

In general, according to one embodiment, a video display apparatus includes a measuring module and a controller. The measuring module is configured to measure a viewing time of 3D video. The controller is configured to determine whether or not the viewing time has reached or will soon reach a viewing restriction time and, if determining that the viewing time has reached or will soon reach the viewing restriction time, to cause a display module to make a display indicating that the viewing time has reached or will soon reach the viewing restriction time

Exemplary Embodiments will be hereinafter described.

### (First embodiment)

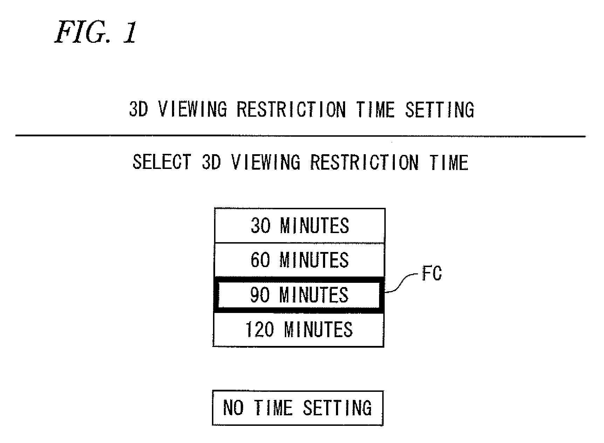

A first embodiment will be described below with reference to Figs. 1 and 3-6.

The first embodiment assumes a system which displays 3D video using 3D glasses. Through liquid crystal shutter control, 3D glasses can supply a left-eye image and a right-eye image to the left eye and the right eye of the user, respectively. In the embodiment, it is also assumed that the 3D glasses use a battery (may be either a primary battery or a secondary battery) for their driving and are equipped with a module for detecting a status (such information as a battery voltage or capacity) of the battery (charge detection function) and informing the system of a detection result.

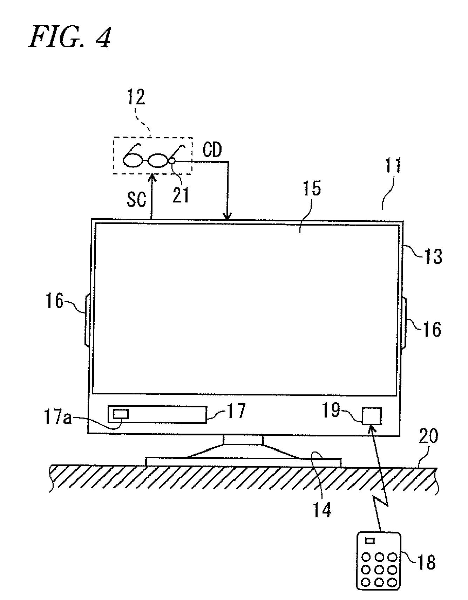

Fig. 4 outlines a 3D video playback system according to the embodiment, which is equipped with a digital TV broadcast receiver 11 as a 3D video playback apparatus and 3D glasses 12 for allowing the user to recognize 3D video when he or she views video displayed on the digital TV broadcast receiver 11.

The digital TV broadcast receiver 11 is mainly composed of a thin case 13 and a support stand 14 for supporting the case 13. The case 13 is equipped with a liquid crystal display panel 15 as a video display module which occupies a major part of the front side of the case 13. The two side walls of the case 13 are provided with respective speakers 16 so enable stereo audio playback.

A bottom-front portion of the case 13 is provided with an operation module 17 including a main power switch 17a and a light receiving module 19 for receiving operation information that is transmitted from a remote controller 18. The support stand 14 is connected rotatably to a central portion of the bottom wall of the case 13, and is configured so as to support the case 13 which is erected when the support stand 14 is placed on the horizontal surface of a stage 20.

When receiving a video signal being broadcast for a 3D display purpose, the digital TV broadcast receiver 11 generates a right-eye video signal and a left-eye video signal on the basis of the received video signal and displays right-eye video and left-eye video alternately on the liquid crystal display panel 15.

Furthermore, the digital TV broadcast receiver 11 generates a shutter control signal SC indicating periods when right-eye video is displayed and periods when left-eye video is displayed, and outputs it to the 3D glasses 12.

The 3D glasses 12 are controlled according to the shutter control signal SC supplied from the digital TV broadcast receiver 11 so as to close the left-eye shutter while the right-eye video is displayed and to close the right-eye shutter while the left-eye video is displayed. The 3D glasses 12 thereby allow the user to recognize 3D video.

The 3D glasses 12 are equipped with a stored energy detecting module 21 for detecting whether or not the battery has run down, that is, detecting an amount of stored electric energy. A stored energy detection signal CD (charge detection signal) is supplied to the digital TV broadcast receiver 11.

If the stored energy detection signal CD is normal, the digital TV broadcast receiver 11 displays right-eye video and left-eye video alternately on the liquid crystal display panel 15.

If the stored energy detection signal CD is not normal, the digital TV broadcast receiver 11 converts a received 3D video signal into an ordinary 2D video signal and displays video on the liquid crystal display panel 15 on the basis of the generated ordinary 2D video signal.

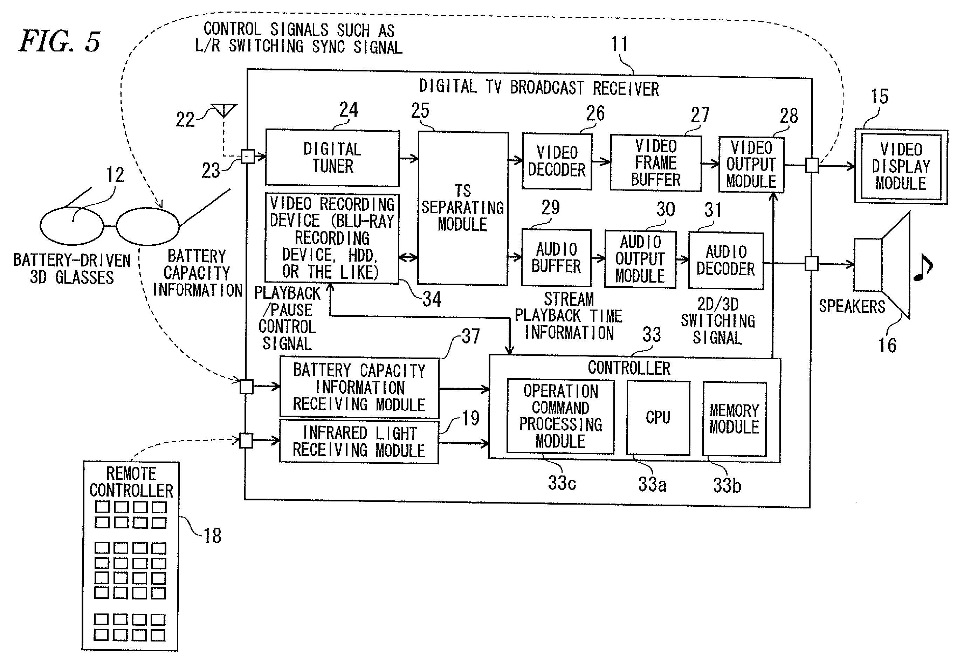

Fig. 5 is a block diagram showing an essential configuration of the 3D video playback system according to the embodiment. The upper half of the block of the digital TV broadcast receiver 11 corresponds to a general digital TV broadcast receiver. The digital TV broadcast receiver 11 has a function of receiving 3D video in the form of broadcast waves or from a video recording device 34 and displaying the received 3D video on the video display module (liquid crystal display panel 15). To this end, the digital TV broadcast receiver 11 generates an L/R switching sync signal (shutter control signal SC) for controlling the 3D glasses 12.

The 3D glasses 12 have a function of sending information indicating a status of the battery incorporated in the 3D glasses 12 to the digital TV broadcast receiver 11 by a wired or wireless communication or by some other method. A controller 33 can supply the video recording device 34 with a control signal relating to playback, pause, or the like of the video recording device 34, and the video recording device 34 can supply the controller 33 with a signal indicating a playback time of a video content being played back.

The controller 33 outputs a 2D/3D switching signal to a video output module 28, and the video output module 28 has a function of selecting a 2D output signal or a 3D output signal. It is assumed that a 3D video content is input in the form of digital broadcast waves or from an external storage apparatus such as an HDD apparatus or a Blu-ray (R) apparatus.

Fig. 5 outlines a signal processing system of the digital TV broadcast receiver 11. Digital TV broadcast signals received by an antenna 22 is supplied to a tuning/demodulating module (digital tuner) 24 via an input terminal 23. The tuning/demodulating module 24 tunes into a signal on a desired channel from the received digital broadcast signals and demodulates the thus-selected broadcast signal into a transport stream (TS).

The transport stream that is output from the tuning/demodulating module 24 is supplied to a TS separating module 25, where it is separated into a video component and an audio component. The video component is decoded by a video decoder 26 into a digital video signal of an original form, which is stored in a video frame buffer 27. The video signal stored in the video frame buffer 27 is read into the video output module 28 on a frame-by-frame basis, subjected to signal processing (described later) therein, and supplied to the liquid crystal display panel 15 (video display module). Video is thus displayed on the liquid crystal display panel 15.

The audio component separated by the TS separating module 25 is temporarily stored in an audio buffer 29 and read from the audio buffer 29 into an audio output module 30, where it is subjected to signal processing. An audio signal that is output from the audio output module 30 is decoded by an audio decoder 31 into digital audio data of an original form, which is converted into analog signals. A sound is thus played back by the speakers 16.

The digital TV broadcast receiver 11 is provided with the video recording device 34, which may be an external recording/playback apparatus such as an optical disc recording/playback apparatus which performs recording and playback on an optical disc such as a DVD (digital versatile disc) or an external HDD (hard disk drive). A transport stream that is output from the video recording device 34 is supplied to the TS separating module 25. The TS separating module 25 selects one of a transport stream that is supplied from the tuning/demodulating module 24 and a transport stream that is supplied from the video recording device 34, and separates it into a video component and an audio component.

In the digital TV broadcast receiver 11, the controller 33 supervises various operations including the above-described various receiving operations. The controller 33 incorporates a CPU (central processing unit) 33a. When an operation command processing module 33c receives operation information from the operation module 17 or receives operation information that is transmitted from the remote controller 18 and received by the light-receiving module 19, the controller 33 controls related components so that their operations reflect the content of the operation.

In doing so, the controller 33 uses a memory module 33b. The memory module 33b is mainly composed of a ROM (read-only memory) which is stored with control programs to be run by the CPU 33a, a RAM (random access memory) for providing a work area for the CPU 33a, and a nonvolatile memory for storing various kinds of setting information, control information, etc.

A base clock generated by an oscillator (not shown) and clocks obtained by frequency-dividing the base clock are supplied to the CPU 33a etc. A timer (not shown) that is provided inside or outside the CPU 33a and formed by hardware or software is a base of a viewing restriction timer (described later).

If a video signal that is supplied from the video frame buffer 27 on a frame-by-frame basis is an ordinary 2D video signal, the video output module 28 performs frame rate doubling conversion on the received 2D video signal to enable display on the liquid crystal display panel 15 and supplies a resulting video signal to the liquid crystal display panel 15. Two-dimensional video is thus displayed on the liquid crystal display panel 15.

If a video signal that is supplied from the video frame buffer 27 on a frame-by-frame basis is a 3D video signal, the video output module 28 generates a right-eye video signal and a left-eye video signal on the basis of the received video signal and outputs them alternately to the liquid crystal display panel 15. Three-dimensional video is thus displayed on the liquid crystal display panel 15.

In doing so, the video output module 28 also generates a shutter control signal SC which indicates right-eye video display periods and left-eye video display periods and outputs it to the 3D glasses 12 via an output terminal.

As a result, the 3D glasses 12 are controlled by the shutter control signal SC supplied from the digital TV broadcast receiver 11 so that the left-eye shutter is closed when the right-eye video is displayed and the right-eye shutter is closed when the left-eye video is displayed. The user can thus recognize 3D video.

The controller 33 can easily determine whether a video signal that is supplied from the video frame buffer 27 on a frame-by-frame basis is an ordinary 2D video signal or a 3D video signal by, for example, detecting attribute information that is added to the video signal.

As mentioned above, the 3D glasses 12 are equipped with the stored energy detecting module 21 for detecting the amount of stored electric energy. The stored energy detecting module 21 sends, by radio, the stored energy detection signal CD, which is received by a battery capacity information receiving module 37. If the amount of stored electric energy indicated by the stored energy detection signal CD received by the battery capacity information receiving module 37 is normal, the controller 33 causes the video output module 28 to generate a right-eye video signal and a left-eye video signal on the basis of a received video signal so that they are displayed alternately on the liquid crystal display panel 15 as 3D video.

If the amount of stored electric energy indicated by the stored energy detection signal CD is not normal, the video output module 28 converts a received video signal into an ordinary 2D video signal, performs frame rate doubling conversion on the generated ordinary 2D video signal to enable display on the liquid crystal display panel 15, and supplies a resulting video signal to the liquid crystal display panel 15. Two-dimensional video is thus displayed on the liquid crystal display panel 15.

In the above-configured 3D video playback system, the user makes settings described below.

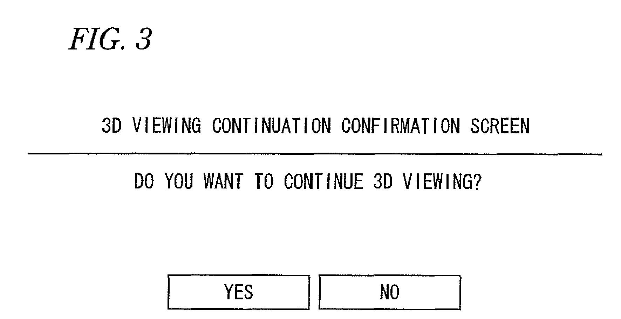

Fig. 1 shows a 3D viewing restriction time setting screen according to the embodiment. Like a screen shown in Fig. 3 (described later), this screen is used together with the remote controller 18 to make a setting in an interactive manner through the operation command processing module 33c. The remote controller 18 is provided with buttons for moving a focus (cursor) upward, downward, rightward, and leftward, an enter button, etc.

The 3D viewing restriction timer is to restrict the 3D viewing time of the user to prevent the user from viewing 3D video for an unduly long time. This function is effective only when another setting item "viewing restriction" (not shown) is set to "restrict."

It is possible to set whether to display a 3D viewing continuation confirmation screen (see Fig. 3) upon a lapse of a certain time of one item "viewing restriction timer" of "3D viewing restriction setting" which is accessed via a higher-level menu "3D setting" (not shown). Setting items and corresponding operations are as follows.
30 minutes: The 3D viewing continuation confirmation screen is displayed upon a lapse of 30 minutes from the start of 3D viewing.
60 minutes: The 3D viewing continuation confirmation screen is displayed upon a lapse of 60 minutes from the start of 3D viewing.
90 minutes: The 3D viewing continuation confirmation screen is displayed upon a lapse of 90 minutes from the start of 3D viewing. In the screen of Fig. 1, the focus FC is placed at this item.
120 minutes: The 3D viewing continuation confirmation screen is displayed upon a lapse of 120 minutes from the start of 3D viewing.
No time setting (off): The viewing time is not restricted (the 3D viewing continuation confirmation screen is not displayed).

For example, the 3D viewing restriction timer is set to "off" at the time of shipment of the system from a factory. A timer for display of the 3D viewing continuation confirmation screen is canceled when 3D display is canceled (permanent cancellation). When 3D display is activated again, a timer set time is reset and countdown is restarted from a newly set time.

A timer continues to operate during "temporary cancellation" (e.g., during display of a commercial message or an EPG (electronic program guide)). If a timer set time has expired during the "temporary cancellation", 3D display is canceled (the 3D viewing continuation confirmation screen is not displayed). Three-dimensional display may be stopped by a known technique. For example, one of a left-eye image and a right-eye image may be displayed.

It is desirable that 3D viewing start time point when timer measurement is started be a time point of the start of display of 3D video on the liquid crystal display panel 15. Alternatively, timer measurement may be started from a time point when the user puts on the 3D glasses 12 or the 3D glasses 12 starts operating.

An end or resetting of timer measurement occurs at the end of 3D viewing. More specifically, it occurs at the time of (1) expiry of a timer set time, (2) switching to a channel of non-3D video caused by a tuning operation of the user, (3) display of a recorded program list caused by the user, (4) switching to multi-screen display, or the like.

"Temporary cancellation" that is not an end or resetting of timer measurement occurs while (1) 2D video of a commercial message or the like is being broadcast temporarily during broadcast of a 3D program or (2) an EPG is being displayed in response to an operation of the user.

Whereas in the above example a 3D viewing restriction time is specified by selecting one of the setting items, the digital TV broadcast receiver 11 may be configured so that a 3D viewing restriction time can be specified by the user by inputting a numerical value (in minutes, for example).

Fig. 3 shows an example 3D viewing continuation confirmation screen. A confirmation screen for prompting the user to make a selection as to whether to continue the viewing is displayed upon a lapse of a set time from the start of 3D display.

If "yes" is selected by pressing the "<" and ">" buttons (buttons for moving the focus (cursor) leftward and rightward, respectively, and the enter button is then pressed, viewing continuation is decided on and the 3D display is continued. Countdown from a time that has been set in the item "3D viewing restriction setting" is started with this timing. If "no" is selected and the enter button is pressed, the 3D display is stopped. In the confirmation screen, the focus is placed initially at "no." A timer set time is displayed when it has expired or 3D display has been canceled.

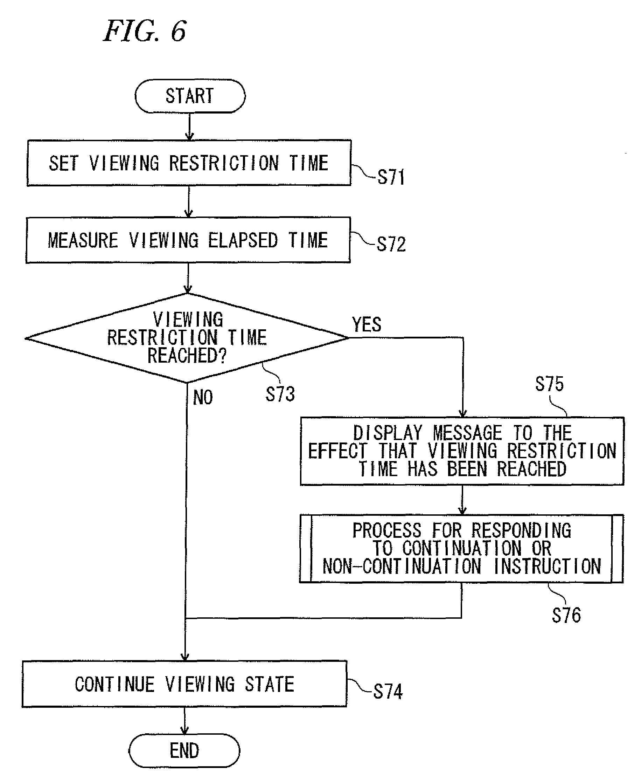

Fig. 6 is a flowchart of a process that is executed mainly by the controller 33 in the embodiment.

At step S71, a viewing restriction time is set. Usually, this is done only intially. However, a determination as to whether or not re-setting has been instructed by the user is made. If re-setting is instructed, the viewing restriction time is set again.

At step S72, a viewing elapsed time is measured. At step S73, it is determined whether the viewing elapsed time has reached the viewing restriction time. If the determination result of step S73 is "no", at step S74 the 3D viewing state is continued. If the determination result of step S73 is "yes", at step S75 a message to the effect that the viewing restriction time has been reached is displayed. At step S76, if an instruction to continue the 3D display is given in response to the message displayed at step S75, the process moves to step S74. If no such instruction is given, the 3D display state is stopped and the process is finished.

As for the 3D video discrimination method, a 3D video signal may contain flag information indicating that the signal is of 3D and format discrimination information. 3D video signals that are output from apparatus of HDMI version 1.4 or higher necessarily contain flag information and format discrimination information. Such pieces of information enable discrimination of 3D video.

The first embodiment provides an advantage that a 3D viewing restriction time can be set through specification by the user. Furthermore, whereas in the relate art merely a warning message to the effect that a viewing restriction has been reached is displayed, the embodiment makes it possible to display a screen that allows the user to make a selection as to whether to continue the viewing.

### (Second embodiment)

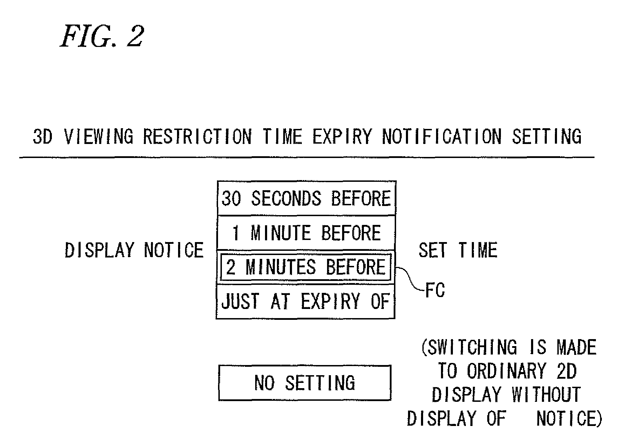

A second embodiment will be described below with reference to Figs. 2-6. Modules, etc. having the same ones in the first embodiment will not be described in detail.

Fig. 2 shows a screen for setting a manner of notification of (upcoming) expiry of a 3D viewing restriction time in the second embodiment. In this example, the focus FC is placed at "2 minutes before." If the enter button is pressed, a warning message (that prompts the user to make a selection as to whether to continue the viewing) is displayed two minutes before expiry of a viewing restriction time that was set by the 3D viewing restriction setting function.

If "no time setting" is selected in the 3D viewing restriction setting function, a transition to the item "3D viewing restriction time expiry notification setting" is prohibited, the setting is saved, and the display of the screen is finished.

Usually, measurement of a 3D viewing time is started upon the start of 3D viewing. One of the following operations is performed depending on a setting that was made in the item "3D viewing restriction time expiry notification setting." For example, the "start of 3D viewing" means the start of 3D display. Alternatively, it may mean the start of use of the 3D glasses 12 worn by the user (after charge detection).
A. Case that one of "30 minutes" to "120 minutes" was specified in the "3D viewing restriction time setting"
   (1) Case that one of "30 seconds before," "1 minute before," "2 minutes before," and "just at expiry of" was set in the "3D viewing restriction time expiry notification setting"
      The 3D viewing continuation confirmation screen is displayed (see Fig. 3) (If a 3D viewing restriction time is reached with this screen displayed, switching is made to ordinary 2D display.).
      If "yes" is selected, measurement of a 3D viewing time is newly started and the display of the 3D viewing continuation confirmation screen is finished.
      If "no" is selected, switching is made to ordinary 2D display, the measurement of the 3D viewing time is finished, and the display of the 3D viewing continuation confirmation screen is finished.
   (2) Case that "no setting" was set in the "3D viewing restriction time expiry notification setting"
      Switching is made to ordinary 2D display, and measurement of a 3D viewing time is finished.
B. Case that "no time setting" was set in the "3D viewing restriction time setting"
   An ordinary operation is continued (nothing is done for the 3D viewing restriction).
   The second embodiment provides an advantage that the user can set (specify) timing of notification of expiry of a 3D viewing restriction time. In the related art, switching to 2D video tends to occur upon expiry of a 3D viewing restriction time. The embodiment allows the user to avoid such an event.

The embodiments realize the following functions:
1. The function of notifying the user of upcoming expiry of a 3D viewing restriction time in advance.
2. The function of setting when to notify the user of upcoming expiry of a 3D viewing restriction time.
3. The function of making a selection as to whether to continue 3D viewing.
4. The function of setting a 3D viewing restriction time.

As a result, the embodiments provide the following advantages:
(1) Since a 3D viewing time can be restricted, the degree of eye fatigue or the like can be reduced.
(2) 3D viewing can be continued while a 3D viewing time is restricted.
(3) 3D viewing can be stopped automatically upon expiry of a 3D viewing restriction time (by selecting one of "30 minutes" to "120 minutes" in the "3D viewing restriction time setting" and selecting "no setting" in the "3D viewing restriction time expiry notification setting").

As described above, in viewing 3D video using, for example, a digital broadcast receiver, the embodiments allow the user to make settings as to a function of notifying the user of expiry of a 3D viewing restriction time in consideration of influence of 3D viewing on the user's health.

The invention is not limited to the above embodiments, and can be practiced so as to be modified in various manners without departing from the spirit and scope of the invention. For example, the invention can be applied to 3D display of signals from various input sources. That is, the invention can accommodate not only a digital broadcast but also an HDMI input and a video input. The invention can also be applied to recording and playback of a digital broadcast.

Furthermore, the invention can accommodate 2D-to-3D conversion of signals from various input sources capable of recording various broadband 3D programs.

While certain embodiments have been described, these embodiments have been presented by way of example only, and are not intended to limit the scope of the invention. Indeed, the novel apparatus and method described herein may be embodied in a variety of other forms; furthermore, various omissions, substitutions and changes in the form of the apparatus and method, described herein may be made without departing from the sprit of the invention. The accompanying claims and their equivalents are intended to cover such forms or modifications as would fall within the scope and sprit of the invention.

## Claims

1. A video display apparatus comprising:
a measuring module configured to measure a viewing time of 3D video; and
a controller configured to determine whether or not the viewing time has reached or will soon reach a viewing restriction time and, if determining that the viewing time has reached or will soon reach the viewing restriction time, to cause a display module to make a display indicating that the viewing time has reached or will soon reach the viewing restriction time.

2. The apparatus of claim 1, further comprising:
a setting module configured to set the viewing restriction time for 3D video,
wherein the controller is configured to, if determining that the viewing time has reached or will soon reach the viewing restriction time, cause the display module to make a display that enables selection of continuation or non-continuation of viewing as the display indicating that the viewing time has reached or will soon reach the viewing restriction time.

3. The apparatus of claim 1, further comprising:
a timing setting module configured to set timing of making the display indicating that the viewing time has reached or will soon reach the viewing restriction time.

4. The apparatus of claim 1, further comprising:
a display module.

5. The apparatus of claim 2, wherein if viewing continuation is selected, the controller is configured to cause continuation of the viewing.

6. A video display method comprising:
setting a viewing restriction time for 3D video;
measuring a viewing time of 3D video; and
determining whether or not the viewing time has reached or will soon reach the viewing restriction time and, if determining that the viewing time has reached or will soon reach the viewing restriction time, causing a display module to make a display indicating that the viewing time has reached or will soon reach the viewing restriction time.
